Europäisches Patentamt

European Patent Office

Office européen des brevets

(11) Veröffentlichungsnummer: **0 321 699 B1**

(12) **EUROPÄISCHE PATENTSCHRIFT**

(45) Veröffentlichungstag der Patentschrift: **18.03.92**

(51) Int. Cl.⁵: **B23Q 3/155**

(21) Anmeldenummer: **88119129.0**

(22) Anmeldetag: **17.11.88**

(54) **Zusatzmagazin für programmgesteuerte Werkzeugmaschinen.**

(30) Priorität: **04.12.87 DE 8716086 U**

(43) Veröffentlichungstag der Anmeldung:
**28.06.89 Patentblatt 89/26**

(45) Bekanntmachung des Hinweises auf die
Patenterteilung:
**18.03.92 Patentblatt 92/12**

(84) Benannte Vertragsstaaten:
**CH DE ES FR GB IT LI**

(56) Entgegenhaltungen:
EP-A- 0 236 812
DE-A- 2 013 403
DE-U- 8 707 780
US-A- 3 355 798
US-A- 4 547 955

PATENT ABSTRACTS OF JAPAN, Band 8, Nr.
276 (M-346)[1713], 18. Dezember 1984; & JP-
A-59 146 727 (MURATA KIKAI K.K.) 22-08-1984

PATENT ABSTRACTS OF JAPAN, Band 8, Nr.
61 (M-284)[1498], 23. März 1984; & JP-A-58
211 842 (TOYODA KOKI K.K.) 09-12-1983

(73) Patentinhaber: **MAHO Aktiengesellschaft
Postfach 1280 Tiroler Strasse 85
W-8962 Pfronten(DE)**

(72) Erfinder: **Babel, Werner
Achweg
W-8962 Pfronten(DE)**

(74) Vertreter: **Patentanwälte Beetz sen. - Beetz
jun. Timpe - Siegfried - Schmitt-Fumian-
Mayr
Steinsdorfstrasse 10
W-8000 München 22(DE)**

## Beschreibung

Die Erfindung betrifft ein programmgesteuertes Fräs- und Bohrzentrum mit zusätzlichem Werkzeugspeicher der im Oberbegriff des Patentanspruchs 1 angegebenen Gattung.

In den letzten Jahren sind eine Vielzahl verschiedener Bearbeitungszentren zur spanenden Bearbeitung von komplizierten Werkstücken in Groß- und Kleinserie entwickelt worden, deren programmgesteuert angetriebene Werkzeugmagazine eine Speicherkapazität für eine große Anzahl von Werkzeugen besitzen. Diese große Speicherkapazität der Werkzeugmagazine ermöglicht eine entsprechend große Anzahl verschiedener Bearbeitungsvorgänge bei ein und demselben oder auch bei unterschiedlichen Werkstücken, ohne daß manuell in den Bearbeitungsprozeß eingegriffen werden müßte. Nachteilig ist jedoch der mit diesen komplexen Bearbeitungszentren verbundene Investitionsaufwand sowie der von den Maschinen selbst und insbesondere von ihren Magazinen beanspruchte Platzbedarf. Obgleich zwischenzeitlich auch programmgesteuerte Universal-Fräs- und Bohrmaschinen bekanntgeworden sind, die aufgrund ihrer Vorschubantriebe und ihrer Programmsteuerung zur automatischen Bearbeitung auch komplexer Werkstücke geeignet sind, war die Anzahl der einzelnen selbsttätig ablaufenden Bearbeitungsvorgänge doch durch die geringere Kapazität der Werkzeugmagazine beschränkt. Die Vergrößerung der Aufnahmekapazität der Werkzeugmagazine hätte nicht nur eine Erhöhung der Investitionskosten, sondern auch eine räumliche Vergrößerung der gesamten Werkzeugmaschine zur Folge.

Aus der DE-OS 36 07 391 ist ein Werkzeugwagen zur Beschikkung der Werkzeugmagazine von numerisch gesteuerten Werkzeugmaschinen bekannt, der auch die Funktion eines Zusatzmagazins erfüllen kann und einen Werkzeugspeicher in Form einer Endloskette mit Werkzeugaufnahmen sowie einen Werkzeugwechsler mit bewegbaren Greifzangen zur Übergabe eines ausgewählten Werkzeuges aus dem Werkzeugspeicher an das Werkzeugmagazin der Werkzeugmaschine - und umgekehrt besitzt. An der plattenförmigen Tragkonstruktion ist ein Schlitten horizontal und vertikal motorisch bewegbar angeordnet, der an seiner vertikalen Außenseite den Werkzeugspeicher und an seiner horizontalen Oberseite den Werkzeugwechsler trägt. Der Werkzeugwechsler weist einen auf dem Schlitten horizontal und quer verschiebbaren Support sowie einen um eine Schrägachse verdrehbaren Winkelträger mit zwei diametral gegenüberliegenden Greifarmen und daran montierten Greiferzangen auf. Obgleich dieser bekannte Werkzeugwagen auch als Zusatzmagazin verwendet werden kann, wurde er doch für die Beschickung mehrerer Bearbeitungszentren mit Werkzeugen konzipiert. Dieser bekannte Werkzeugwagen ist u. a. durch die verschiedenen Antriebsaggregate und deren Steuerung konstruktiv aufwendig.

Aus der DE-OS 2 013 403 ist eine programmgesteuerte Werkzeugmaschine mit einem maschineneigenen Schlittenmagazin und einem diesem zugeordneten Werkzeugwechsler bekannt, die mit einem gattungsgemäßen Zusatzmagazin ausgerüstet ist. Zur Verkürzung der Wechselzeit zwischen zwei verschiedenen Arbeitsprogrammen enthält das Vorrats- bzw. Zusatzmagazin mindestens ebenso viele nebeneinanderliegende Speicherplätze wie das Schlittenmagazin Werkzeugaufnahmen aufweist. Das Zusatzmagazin besitzt einen vertikalen Ständer von dreieckigem Querschnitt, an dessen Seiten je eine Endloskette mit den Speicherplätzen für die Werkzeuge angeordnet ist. Alle drei Endlosketten können von einem gemeinsamen Antrieb bewegt werden, um ein mittels eines Lesekopfes ausgewähltes Werkzeug in eine Wechselposition zu bringen. Der Ständer selbst ist um seine vertikale Hochachse verdrehbar, so daß ein ausgewähltes Kettenmagazin in den Zugriffsbereich des Werkzeugwechslers gedreht werden kann. Der die Werkzeugübergabe zwischen dem ausgewählten Kettenmagazin und dem maschineneigenen Schlittenmagazin ausführende Werkzeugwechsler besitzt zwei diametral gegenüberliegende Greifer, die teleskopartig ausgefahren werden können.

Aufgabe der Erfindung ist es, ein programmgesteuertes Fräs- und Bohrzentrum mit zusätlichem Werkzeugspeicher zu schaffen, das bei einfachem technischen Aufbau eine mehrfache Steigerung der Kapazität des maschineneigenen Werkzeugmagazins sowie das Besetzen mit Werkzeugen ohne Betriebsunterbrechung ermöglicht.

Diese Aufgabe wird durch die Merkmale des Patentanspruchs 1 gelöst.

Die erfindungsgemäße Verwendung von zwei gesonderten horizontalen Kettenmagazinen als Werkzeugspeicher bietet in Verbindung mit dem am Ständer in einer vorgegebenen Position fest montierten Werkzeugwechsler die Möglichkeit, die Werkzeuge zwischen dem einen Kettenmagazin und dem maschineneigenen Werkzeugmagazin entsprechend dem jeweiligen Arbeitsprogramm der Maschine zu wechseln und zu gleicher Zeit das zweite auf dem Drehtisch montierte Kettenmagazin mit Werkzeugen für zukünftige Bearbeitungsvorgänge zu besetzen. Um Kollisionen bei, der Drehbewegung des Drehtisches bzw. der in den Kettenmagazinen enthaltenen mitunter sperrigen Werkzeuge mit dem fest montierten Werkzeugwechsler zu vermeiden, ist der Werkzeugspeicher zweckmäßig seitlich versetzt hinter der Maschine angeordnet, so daß das maschineneigene Magazin rückseitig bedient werden kann. Zu diesem Zweck ist der Werkzeugwechsler in der Verbindungslinie zwischen der Achse des Drehtisches und der Achse des rückwärtigen Kettenrades des maschineneigenen Werkzeugmagazins positioniert.

Das maschineneigene Magazin kann ein Kettenmagazin, ein Tellermagazin oder ein anderes geeignetes Werkzeugmagazin mit vertikaler Werkzeugausrichtung sein.

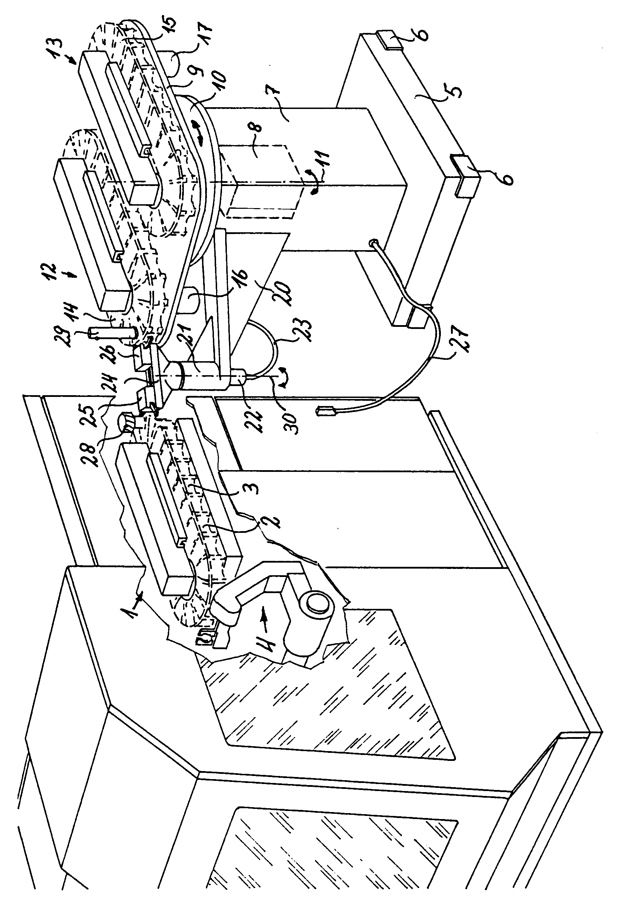

Im folgenden wird ein Ausführungsbeispiel der Erfindung anhand der Zeichnung im einzelnen beschrieben, in welcher ein zusätzlicher Werkzeugspeicher zusammen mit einem Fräs- und Bohrzentrum perspektivisch dargestellt ist.

Bei dem dargestellten Bearbeitungszentrum handelt es sich um eine programmgesteuerte Fräs- und Bohrmaschine, die von einem Schutzgehäuse umgeben ist. Innerhalb des Schutzgehäuses seitlich neben dem nicht dargestellten Spindelstock ist das maschineneigene Werkzeugmagazin 1 angeordnet, das einen Werkzeugspeicher in Form einer Endloskette 2 mit Werkzeugaufnahmen 3 sowie zwei nicht dargestellte Kettenräder und einen programmgesteuerten Antrieb aufweist. Vor diesem maschineneigenen Werkzeugmagazin befindet sich ein Werkzeugwechsler 4 zur Bedienung der - nicht dargestellten - vertikalen und/oder horizontalen Arbeitsspindel.

Schräg hinter dem Bearbeitungszentrum ist ein zusätzlicher Werkzeugspeicher angeordnet, der eine Fußplatte 5 mit Füßen 6 enthält, die seitliche Verschiebungen und ein genaues Positionieren in bezug auf das Bearbeitungszentrum ermöglichen. Auf der Fußplatte 5 ist ein rechteckiger Ständer 7 befestigt, in dem ein Antriebsaggregat 8 für einen Drehtisch 10 untergebracht ist. Der Drehtisch 10 ist im Ständer 7 bei seiner Drehbewegung um die Achse 11 geführt. Auf dem Drehtisch 10 sind oberhalb einer Auffangwanne 9 zwei gleich ausgebildete Kettenmagazin 12, 13 montiert, die aus je einer Endloskette 14, 15 mit einer Reihe von Werkzeugaufnahmen und je einem eigenen Antriebsaggregat bestehen. Jede Endloskette 14, 15 ist über zwei Kettenräder geführt, von denen jeweils eines vom zugehörigen Antriebsaggregat 16 bzw. 17 angetrieben wird. Die beiden Kettenmagazine 12, 13 sind parallel nebeneinander symmetrisch zur Achse 11 des Drehtisches 9 angeordnet, so daß sie bei dessen Verdrehung um 180° ihre gegenseitigen Positionen einnehmen können.

An der vorderen Stirnwand des Ständers 7 ist ein horizontaler Tragarm 20 befestigt, der an seinem freien Ende einen vertikalen Hohlzylinder 21 trägt. Im Hohlzylinder 21 befindet sich ein Antriebsaggregat 22, das über ein Kabel 23 mit Energie versorgt wird. Am oberen Ende des Hohlzylinders 21 befindet sich ein Führungsschuh 24, der vom Antriebsaggregat 22 um die Achse 30 um 180° verdreht werden kann. Auf dem Führungsschuh 24 sind zwei Werkzeuggreifer 25, 26 gegenläufig verschiebbar montiert, und zwar aus der dargestellten ausgefahrenen Stellung, in welcher ihre Zangen je ein Werkzeug des maschineneigenen Magazins 1 und des Kettenmagazins 12 ergreifen, in eine zusammengefahrene Stellung, in welcher die beiden Werkzeuggreifer 25, 26 mit ihren zueinander weisenden Endflächen aneinander anliegen. Jeder Werkzeuggreifer 25, 26 enthält einen Stellantrieb zum Öffnen und Schließen seiner Greiferzangen.

Im Ständer sind Steuermittel für die Antriebsaggregate 8, 16, 17 und 22 angeordnet, die über ein Kabel 27 mit der Programmsteuerung der Werkzeugmaschine verbunden sind.

Der erfindungsgemäße Werkzeugspeicher arbeitet wie folgt:
Wenn ein Werkzeug 28 des maschineneigenen Magazins 1 gegen ein anderes Werkzeug 29 ausgewechselt werden soll, wird dieses Werkzeug 28 durch entsprechende Steuerbefehle in die hintere Wechselposition des Magazins 1 gefahren, wie dies durch den dargestellten Stirnfräser 28 angedeutet ist. Die beiden gleich ausgebildeten Werkzeuggreifer 25, 26 erfassen mit ihren Greiferzangen gleichzeitig je ein Werkzeug, und zwar der Greifer 25 mit seinen weit ausklappbaren Zangen das Werkzeug 28 im Magazin 1 und der Greifer 26 mit seinen ebenfalls weit ausklappbaren Zangen das Werkzeug 29 im Kettenmagazin 12. Durch gleichzeitiges Zusammenfahren beider Werkzeuggreifer 25, 26 werden die beiden Werkzeuge 28, 29 aus den Aufnahmen im jeweiligen Magazin 2 bzw. 12 herausgezogen. Anschließend erfolgt eine Drehbewegung des Führungsschuhs 24 mittels seines Antriebes 22 um 180°, so daß das Werkzeug 29 nunmehr der jetzt leeren Werkzeugaufnahme 3 des maschineneigenen Werkzeugmagazins 1 und das gebrauchte Werkzeug 28 der jetzt leeren Aufnahme 14 im Kettenmagazin 12 gegenüberstehen. Durch Ausfahren der beiden Werkzeuggreifer 25, 26 in die dargestellte Position werden beide Werkzeuge 28, 29 in ihre jeweilige Werkzeugaufnahme eingeschoben und darin festgelegt. Die Greiferzangen öffnen und die Kettenmagazine 12, 13 können zusammen mit dem Drehtisch 10 verdreht werden. Durch diese Ausbildung ergeben sich extrem kurze Wechselzeiten.

Parallel zu den verschiedenen Wechselvorgängen zwischen dem Kettenmagazin 12 und dem maschineneigenen Werkzeugmagazin 1 kann das Kettenmagazin 13 des erfindungsgemäßen Werkzeugspeichers mit neuen Werkzeugen für zukünftige Bearbeitungsvorgänge manuell besetzt werden. Nach Beendigung des einen Bearbeitungszyklus wird der Drehtisch 10 mit Hilfe seines Antriebs 8 um 180° verdreht, so daß nunmehr das Kettenmagazin 13 die bisherige Position des Kettenmagazins 12 im Zugriffsbereich des Übergabe-Wechslers einnimmt, woraufhin dann die in ihm enthaltenen Werkzeuge in der vorstehend beschriebenen Weise gegen die im maschineneigenen Magazin befindlichen Werkzeuge ausgetauscht werden können.

In dem dargestellten Ausführungsbeispiel ist der Werkzeugspeicher schräg hinter dem Bearbeitungszentrum positioniert und der Tragarm 20 des Übergabe-Wechslers ist in der fiktiven Verbindungslinie zwischen der Drehachse 11 und der Achse des hinteren Kettenrades des maschineneigenen Magazins 1 ausgerichtet. Durch diese Anordnung befindet sich der Übergabe-Wechsler vor einer "Ecke" des in Draufsicht etwa rechteckigen Drehtisches 10, wodurch Kollisionen des Übergabe-Wechslers mit Teilen der Kettenmagazine 12, 13 beim Verdrehen des Drehtisches 10 vermieden werden.

Das Zusatzmagazin kann statt der dargestellten Füße auch angetriebene oder freilaufende Rollen aufweisen, so daß das Zusatzmagazin ggf. auch mehrere Maschinen bedienen und/oder nur bei Bedarf bei der einen oder anderen Werkzeugmaschine eingesetzt werden kann. Werden einziehbare Rollen zusätzlich zu den dargestellten Füßen 6 verwendet, dann wird eine vorteilhafte Mobilität bei gleichzeitiger genauer und fester Positionierung des Zusatzmagazins erreicht.

## Patentansprüche

1. Programmgesteuertes Fräs- und Bohrzentrum mit einem maschineneigenen Werkzeugmagazin (2), einem die Arbeitsspindel bedienenden Werkzeugwechsler (4) und mit einem seitlich hinter dem Werkzeugmagazin positionierten zusätzlichen Werkzeugspeicher, der einen auf einem Fuß (5) montierten Ständer (7) und mehrere Kettenmagazine (12, 13) enthält, die wahlweise durch eine Drehbewegung um eine vertikale Drehachse (11) in den Zugriffsbereich eines zwischen dem Ständer (7) und dem maschineneigenen Werkzeugmagazin (2) positionierten Übergabe-Wechsler (21 - 26) bewegbar sind, welcher einen um eine vertikale Achse (30) verdrehbaren Führungsschuh (24) aufweist, an dem zwei gegenläufig verschiebbare Werkzeuggreifer (25, 26) angeordnet sind, **dadurch gekennzeichnet,** daß auf der Oberseite des Ständers (7) ein horizontaler Drehtisch (10) mit einem im Ständer untergebrachten Antrieb (8) angeordnet ist, daß auf dem Drehtisch (10) zwei Kettenmagazine (12, 13) mit je einem eigenen Antrieb (16, 17) nebeneinander mit horizontalen Längsachsen und vertikalen Kettenradachsen angeordnet sind, in deren Werkzeugaufnahmen die Werkzeuge (28, 29) in gleicher Ausrichtung wie in den Werkzeugaufnahmen (3) des maschineneigenen Werkzeugmagazins (2) mit vertikaler Achse aufgenommen sind und daß der Übergabe-Wechsler (21 - 26) an einer seitlich am drehfesten Ständer (7) befestigten Tragkonstruktion (20) montiert ist.

2. Fräs- und Bohrzentrum nach Anspruch 1, dadurch gekennzeichnet, daß der Übergabe-Wechsler (21 - 26) vor einem Eckbereich des Ständers (7) positioniert ist.

## Claims

1. A programmed cutting and drilling centre comprising: a machine-associated tool magazine (2); a tool changer (4) servicing the work spindle; and an additional tool store which is positioned laterally after the tool magazine and which comprises a column (7) disposed on a base (5) and a number of chain magazines (12, 13) movable selectively by rotation around a vertical rotational axis (11) into the engagement zone of a transfer changer (21 - 26) positioned between the column (7) and the tool magazine (2), the transfer changer (21 - 26) having a guide shoe (24) which is rotatable around a vertical axis (30) and on which two tool grippers (25, 26) movable to opposite hands are disposed, characterised in that a horizontal turntable (10) having a drive (8) disposed in the column (7) is disposed on the top thereof; two chain magazines (12, 13) each having an independent drive (16, 17) are so disposed one beside another on the turntable (10) that their longitudinal axes are horizontal and their sprocket axes are vertical, and the tools (28, 29) are disposed in the tool holders of the chain magazines in the same alignment as in the tool holders (3), but with the axis vertical, as in the tool holders (1) of the machine-associated tool magazine (2), and the transfer changer (21 - 26) is disposed on a support structure (20) secured to the non-rotating column (7).

2. A centre according to claim 1, characterised in that the transfer changer (21 - 26) is disposed before a corner zone of the column (7).

## Revendications

1. Centre de fraisage et d'alésage comportant un magasin d'outils (2) propre à la machine, un changeur d'outils (4) qui dessert la broche de travail, et un magasin de réserve d'outils additionnel positionné latéralement derrière le magasin d'outils et comprenant un montant (7) monté sur un pied (5) et plusieurs magasins à chaine (12, 13), qui peuvent être amenés au choix par un mouvement de rotation autour d'un axe de rotation vertical (11), dans la zone de préhension d'un changeur de transfert (21 - 26) qui est positionné entre le montant (7) et le magasin d'outils (2) propre à la machine, et qui comporte un patin de guidage (24) pouvant tourner autour d'un axe vertical (30) et sur lequel sont disposés deux ensembles de préhension d'outils (25, 26) susceptibles de coulisser réciproquement de manière opposée, caractérisé

en ce que sur le côté supérieur du montant (7) est disposé une table rotative horizontale (10) comprenant un dispositif d'entraînement (8) logé dans le montant, en ce que sur la table rotative (10) sont disposés côte à côte, avec leurs axes longitudinaux en position horizontale et les axes des roues à chaîne en position verticale, deux magasins à chaîne (12, 13) possédant chacun son propre dispositif d'entraînement (16, 17), et dans les logements d'outils desquels les outils (28, 29) sont disposés selon la même orientation que dans les logements d'outils (3) du magasin d'outils (2) propre à la machine, avec leur axe en position verticale, et

en ce que le changeur de transfert (21 - 26) est monté sur une structure de support (20) fixée latéralement sur le montant (7) fixe en rotation.

2. Centre de fraisage et d'alésage selon la revendication 1, caractérisé en ce que le changeur de transfert (21 - 26) est positionné à l'avant d'une zone de coin du montant (7).